# EUROPÄISCHE PATENTANMELDUNG

(11) **EP 4 282 505 A1**
(43) Veröffentlichungstag der Anmeldung: **29.11.2023**
(21) Anmeldenummer: 22175714.9
(22) Anmeldetag: 27.05.2022
(51) Int. Cl.: B01D 5/00, B01D 53/00

(54) **KONDENSATIONS-VORRICHTUNG UND KONDENSATIONS-VERFAHREN ZUR KONDENSATION VON GAS-KOMPONENTEN EINES GAS-GEMISCHES UND HERSTELL-VERFAHREN ZUM HERSTELLEN DER KONDENSATIONS-VORRICHTUNG**

(71) Anmelder: Siemens Aktiengesellschaft, 80333 München (DE)
(72) Erfinder: Kiener, Christoph, 81369 München (DE); Otto, Robert, 81549 München (DE); Nicolai, Alexander, 12045 Berlin (DE)
(74) Vertreter: Siemens Patent Attorneys

(57) **Zusammenfassung**

Die Erfindung betrifft eine Kondensations-Vorrichtung zur Kondensation einer Gas-Komponente eines Gas-Gemisches und zur Kondensation mindestens einer weiteren Gas-Komponente des Gas-Gemisches angegeben. Die Kondensations-Vorrichtung weist eine Kondensations-Einheit zur Kondensation der Gas-Komponente und eine weitere Kondensations-Einheit zur Kondensation der weiteren Gas-Komponente auf. Dabei ist zumindest eine der Kondensations-Einheiten derart ausgestaltet, dass die jeweilige Gas-Komponente als Kondensat aus dem Gas-Gemisch extrahiert werden kann. Neben der Kondensation-Vorrichtung wird auch ein Kondensations-Verfahren zur Kondensation der Gas-Komponente des Gas-Gemisches und zur Kondensation der weiteren Gas-Komponente des Gas-Gemisches unter Verwendung der Kondensations-Vorrichtung angegeben. Dabei wird das Gas-Gemisch an den Kondensations-Einheiten derart vorbeigeleitet, dass zumindest eine der Gas-Komponenten als Kondensat aus dem Gas-Gemisch extrahiert wird. Die Kondensations-Vorrichtung weist einen Mehr-Schicht-Körper mit mehreren miteinander verbundenen Schichten auf. Zumindest eine der Schichten weist zumindest eine der Kondensations-Einheiten auf. Gemäß einem weiteren Aspekt der Erfindung wird ein Herstell-Verfahren zum Herstellen der Kondensations-Vorrichtung angegeben. Dabei wird zumindest einer der Kondensations-E mit Hilfe eines 3d-Drucks-Verfahrens hergestellt.

## Beschreibung

Die Erfindung betrifft eine Kondensations-Vorrichtung und ein Kondensations-Verfahren zur Kondensation einer Gas-Komponente eines Gas-Gemisches und zur Kondensation mindestens einer weiteren Gas-Komponente des Gas-Gemisches. Daneben wird ein Herstell-Verfahren zum Herstellen der Kondensations-Vorrichtung angegeben.

Die Kondensation einer Gas-Komponente (gasförmiger Bestandteil) eines Gas-Gemisches (Mischung aus Gas-Komponenten) erfolgt z.B. über Destillation der Gas-Komponente. Dabei können mittels Rektifikation (Kolonnen-Destillation) mehrere Gas-Komponenten aus einem Gas-Gemisch abgetrennt werden. Dadurch kann das Gas-Gemisch in seine Gas-Bestandteile zerlegt werden.

Zur Rektifikation eines Gas-Gemisches wird z.B. eine Rektifizier-Säule benutzt. Dabei wirkt auf ein Kondensat (kondensierte Gas-Komponente, kondensiertes Produkt) die Schwerkraft, die gegen einen durch eine Verdampfung verursachten Stoff-Transport des Gas-Gemisches gerichtet ist. Dadurch kann ein Anströmen des Gas-Gemisches in der Rektifizier-Säule behindern werden, so dass zum Auftrennen des Gas-Gemisches mit einem hohen Reinheitsgrad eine sehr hohe Rektifizier-Säule verwendet werden muss.

Aufgabe der vorliegenden Erfindung ist es, aufzuzeigen, wie ein Gas-Gemisch in seine Gas-Komponenten zerlegt werden kann, ohne dass eine hohe Rektifizier-Säule verwendet werden muss.

Zur Lösung der Aufgabe wird eine Kondensations-Vorrichtung zur Kondensation einer Gas-Komponente eines Gas-Gemisches und zur Kondensation mindestens einer weiteren Gas-Komponente des Gas-Gemisches angegeben. Die Kondensations-Vorrichtung weist eine Kondensations-Einheit zur Kondensation der Gas-Komponente und eine weitere Kondensations-Einheit zur Kondensation der weiteren Gas-Komponente auf. Dabei ist zumindest eine der Kondensations-Einheiten derart ausgestaltet, dass die jeweilige Gas-Komponente als Kondensat aus dem Gas-Gemisch extrahiert werden kann. Die Kondensations-Vorrichtung weist einen Mehr-Schicht-Körper mit mehreren miteinander verbundenen Schichten auf. Die Schichten können im Mehr-Schicht-Körper nebeneinander und/oder übereinander angeordnet sein. Zumindest eine der Schichten weist zumindest eine der Kondensations-Einheiten auf. So ist zumindest eine der Kondensations-Einheiten im Mehr-Schicht-Körper integriert. Vorteilhaft sind beide Kondensations-Einheiten in dem Mehr-Schicht-Körper integriert. Gerade hier ist es vorteilhaft, das 3d-Druck-Verfahren einzusetzen. So kann jede Schicht des Mehrschicht-Körpers individuell gestaltet werden (Schicht-Material, Schicht-Struktur, etc.), so dass die beiden Kondensations-Einheiten für das Kondensieren jeweils einer Gas-Komponente des Gas-Gemisches ausgelegt werden können.

Neben der Kondensation-Vorrichtung wird zur Lösung der Aufgabe auch ein Kondensations-Verfahren zur Kondensation der Gas-Komponente des Gas-Gemisches und zur Kondensation der weiteren Gas-Komponente des Gas-Gemisches unter Verwendung der Kondensations-Vorrichtung angegeben. Dabei wird das Gas-Gemisch an den Kondensations-Einheiten derart vorbeigeleitet, dass zumindest eine der Gas-Komponenten als Kondensat aus dem Gas-Gemisch extrahiert wird.

Gemäß einem weiteren Aspekt der Erfindung wird ein Herstell-Verfahren zum Herstellen der Kondensations-Vorrichtung angegeben. Dabei wird zumindest eine der Kondensations-Einheiten mit Hilfe eines 3d-Drucks-Verfahrens hergestellt. Das 3d-Druck-Verfahren ist ein additives Fertigungs-Verfahren (additive manufacturing process). Vorzugsweise wird für das 3d-Druck-Verfahren ein Pulver-Bett-Verfahren (SLM, selective laser melting) angewendet, bei dem mit Hilfe eines Laser-Strahls ein Einbringen von Aufschmelz-Energie durchgeführt wird. Zum Einbringen der Aufschmelz-Energie kann aber auch ein Teilchen-Strahl (z.B. ein Strahl mit Ionen) eingesetzt werden.

Mit der Erfindung ist es möglich, mehrere gasförmige Komponenten des Gas-Gemisches aus dem Gas-Gemisch zu entfernen und jeweils als Kondensat anzureichern bzw. abzuleiten. Dazu kann das Gas-Gemisch im Ganzen gleichzeitig beiden Kondensations-Einheiten ausgesetzt werden. Das Gas-Gemisch kann aber auch nacheinander die Kondensation-Einheiten passieren. Dafür kann das Gas-Gemisch aufgeteilt werden, so dass ein Teil des Gas-Gemisches nur zur Kondensations-Einheit und ein weiterer Teil des Gas-Gemisches nur zur weiteren Kondensations-Einheit geleitet wird. In einer besonderen Ausgestaltung sind aber die Kondensations-Einheiten derart angeordnet, dass das Gas-Gemisch die Kondensations-Einheiten nacheinander passieren kann. Dazu sind die Kondensations-Einheiten z.B. stromabwärts (entlang einer Strömung des Gas-Gemisches) nacheinander angeordnet.

Als Schicht-Material sind beliebige organische oder anorganische Materialien denkbar. Vorzugsweise wird in Verbindung mit dem 3d-Druck-Verfahren als Schicht-Material für die Schicht mit der Kondensations-Einheit ein metallisches Schicht-Material (reines Metall oder Metall-Legierung) eingesetzt. Dabei können verschiedenste Metall oder Metall-Legierungen zum Einsatz kommen. Mögliche Metalle sind ein Stahl mit einem Anteil von geringen Fremd-Metallen von bis zu 50 Gew.-% (low alloy steels), Werkzeug-Stahl (tool steel), Marging-Stahl (marging steel), rostfreier Stahl (stainless steel) und Duplex-Stahl (duplex stainless steel).

Vorzugsweise ist das metallische Schicht-Material porös. Die Schicht mit der Kondensations-Einheit ist also zumindest zum Teil aus dem porösen Metall aufgebaut. Damit ist es möglich, weitere Schicht-Eigenschaften wie Wärmeleitfähigkeit, WärmeKapazität etc. zusätzlich über die Porosität des Metalls zu beeinflussen.

In einer besonderen Ausgestaltung weist die Schicht mit der Kondensations-Einheit ein poröses Metall mit einer Porosität auf, die einen aus dem Bereich von 1 Vol.-% bis 85 Vol.-% ausgewählten Poren-Anteil aufweist. Das Metall besteht also mit einem Anteil von bis zu 85 Vol.-% aus (offenen und/oder geschlossenen) Poren. Die Porosität führt zu einem Kavernen-Netzwerk, über das das entsprechende Kondensat gebildet und abgeleitet werden kann.

Beide Kondensations-Einheiten können Schichten des Mehrschicht-Körpers aufweisen. Um unterschiedliche Kondensations-Eigenschaften zu erzielen, können die beiden Schichten unterschiedliche Schicht-Materialien oder unterschiedliche Schicht-Strukturen aufweisen. In einer besonderen Ausgestaltung weisen die Kondensations-Einheit und die weitere Kondensations-Einheit ein poröses Metall auf und die porösen Metalle der Kondensations-Einheiten weisen voneinander unterschiedliche Porositäten auf. Die Kondensations-Vorrichtung weist also ein poröses Metall mit Metall-Poren auf. Die Metall-Poren können Kondensations-Keime für die Kondensation der entsprechenden Gas-Komponenten bilden. Die Metall-Poren können aber auch nur Kanäle zum Ableiten der kondensierten Gas-Komponenten bilden.

Die weitere Kondensations-Einheit verfügt über ein gleiches (oder verschiedenes) weiteres poröses Metall, das zur Kondensation der weiteren Gas-Komponente eine weitere, vorzugsweise verschiedene Porosität aufweist.

Das poröse Metall einer der Kondensations-Einheiten weist zur Bildung des jeweiligen Kondensats eine Absorptions- (bzw. Adsorptions-)Oberfläche für die Absorption (bzw. Adsorption) einer der Gas-Komponenten auf. Über die Absorptions-Oberfläche diffundiert die Gas-Komponente in die jeweilige Schicht und kondensiert dann in der Schicht.

Aufgrund der Porositäten zeichnen sich die porösen Metalle der Schichten durch eine große aktive Oberfläche (Absorptions-Oberfläche) aus, über die eine KondensationsReaktion stattfinden kann.

Um die Kondensation einer der Gas-Komponenten zusätzlich zu beeinflussen, ist es von Vorteil, wenn die entsprechende Absorptions-Oberfläche zumindest eine Absorptions-Beschichtung aufweist. Beispielsweise ist die Absorptions-Beschichtung hydrophil oder hydrophob. In diesem Fall könnten trotz Verwendung von gleichen Metallen mit gleichen Porositäten die Kondensationen der Gas-Bestandteile beeinflusst werden, mit den Kondensations-Einheiten unterschiedliche Gas-Komponenten angereichert werden können. Die Absorptions-Beschichtung können auf verschiedene Weisen aufgebracht werden, z.B. durch Tränken, Entleeren und Trocknen von metallorganischen Verbindungen, Detergenzien, galvanotechnischen Verbindungen. Denkbar sind auch chemische und/oder physikalische Gas-Phasen-Abscheiden-Verfahren.

Insbesondere weist zumindest eine der Schichten des Mehr-Schicht-Körpers mindestens eine Verstärkungs-Struktur auf. Damit ist es möglich, bei relativ hohen Druck-Differenzen die Schicht-Dicken relativ klein zu halten mit der Folge relativ hoher thermischer Leitfähigkeit.

Zum Ableiten der bei der Kondensation freiwerdenden Kondensations-Wärme kann eine Wärme-Senke als separates Bauteil vorgesehen sein, das mit den Schichten des Mehrschicht-Körpers in thermischen Kontakt steht. Insbesondere weist aber zumindest eine der Schichten des Mehr-Schicht-Körpers eine Wärme-Senke zum Ableiten von bei der Bildung des Kondensats freiwerdenden Kondensations-Wärme auf. Dabei kann die Wärme-Senke in einer separaten Wärme-Senken-Schicht des Mehr-Schicht-Körpers integriert sein, die mit den Schichten der Kondensations-Bereiche in thermisch leitendem Kontakt steht. Denkbar ist aber auch, dass die Wärme-Senke in mindestens einer der Schichten der Kondensations-Bereiche integriert ist. Möglich ist auch, dass in jeder der Schichten der Kondensations-Bereiche jeweils eine Wärme-Senke integriert ist. Damit ist es möglich, die Kondensation-Prozesse in den einzelnen Schichten mehr oder weniger unabhängig voneinander zu beeinflussen.

Um die Kondensations-Prozesse in den einzelnen Schichten zusätzlich zu beeinflussen ist es vorteilhaft, wenn die Wärme-Senke eine Wärme-Senken-Struktur aufweist. Durch die Wärme-Senken-Struktur kann beispielsweise eine Kühl-Oberfläche der Wärme-Senken-Struktur und damit eine durch die Wärme-Senke verbesserte Kondensations-Leistung der Kondensations-Vorrichtung erhöht werden. Zur Erhöhung der Kondensations-Leistung weist die Wärme-Senken-Struktur insbesondere zumindest einen Kühl-Kanal zur Aufnahme eines Kühl-Fluids auf. Der Kühl-Kanal wird beispielsweise von einer Kapillare (Kühl-Kapillare) mit Hilfe von (offenen) Poren in der entsprechenden Schicht gebildet. Das Kühl-Fluid ist beispielsweise ein Kühl-Gas. Das Kühl-Fluid kann auch eine Kühl-Flüssigkeit wie beispielsweise Wasser sein. Mit Hilfe des Kühl-Fluids wird Kondensations-Wärme effizient über den Kühl-Kanal abgeleitet. Dies unterstützt die Kondensation der Gas-Komponente bzw. die Kondensation der weiteren Gas-Komponente.

Durch den Kühl-Kanal kann das Kühl-Fluid passiv (z.B. aufgrund von Konvektion) und/oder aktiv (z.B. mit Hilfe einer Pumpe) geleitet werden. Besonders vorteilhaft ist es dabei, wenn der Kühl-Kanal einen aus dem Bereich von 1 µm bis 1 mm und insbesondere aus dem Bereich von 10 µm bis 900 µm ausgewählten Kanal-Durchmesser aufweist. Höhere oder niedrigere Kanal-Durchmesser sind auch denkbar. Auch hier ist die Anwendung des 3d-Druck-Verfahrens vorteilhaft, um die Kühl-Kanäle im Mehr-Schicht-Körper zu integrieren.

Mit Hilfe des 3d-Druck-Verfahrens können allgemein verschiedenste Kondensations-Einheits-Parameter (z.B. Schicht-Parameter) wunschgemäß ausgestaltet werden. In einer besonderen Ausgestaltung unterscheiden sich die Kondensations-Einheit und die weitere Kondensations-Einheit in mindestens einem aus der Gruppe Wärmekapazität, Material-Dichte, Schicht-Dicke, Wärmeleitfähigkeit, durchschnittlicher Poren-Durchmesser, durchschnittlicher Kanal-Durchmesser und Absorptions-Beschichtung ausgewählten Kondensations-Einheits-Parameter voneinander.

In einer besonderen Ausgestaltung ist aus den Kondensations-Einheits-Parametern ein Gesamt-Kondensation-Parameter gebildet, der einen Gesamt-Parameter-Gradienten aufweist. Mit dem Gesamt-Kondensations-Parameter (z.B. durchschnittlicher Poren-Durchmesser) ist es möglich, die Kondensation der Gas-Komponenten in den jeweiligen Kondensations-Einheiten zu beeinflussen und damit das Auftrennen der Gas-Komponenten zu verbessern. Dabei ist es möglich, den Gesamt-Parameter-Gradienten zu variieren. In einer besonderen Ausgestaltung wird daher der Gesamt-Parameter-Gradient eingestellt. Dies geschieht vor und/oder während des Kondensations-Verfahrens (Kondensations-Prozesses).

Mit Hilfe des Kondensations-Verfahrens können verschiedenste Gas-Komponenten eines Gas-Gasgemisches extrahiert werden. Dies gelingt auch dann, wenn die Gas-Komponenten ähnliche chemische und/oder physikalische Eigenschaften aufweisen (z.B. Hydrophilie). Besonders geeignet ist das Kondensations-Verfahren, wenn als Gas-Komponente und/oder als weitere Gas-Komponente ein aus der Gruppe Wasser, Methanol und Dimethylether ausgewähltes Gas verwendet wird.

Im Hinblick auf den Herstell-Prozess im Rahmen des 3d-Druck-Verfahrens ist es besonders vorteilhaft, wenn ein Variieren einer Aufschmelz-Energie durchgeführt wird. Zum Variieren der Aufschmelz-Energie werden insbesondere eine Laser-Energie des Laser-Strahls und/oder ein Scan-Abstand des Laser-Strahls eingestellt. Der Scan-Abstand des Laser-Strahls wird auch als Hatch-Abstand (hatch distance) bezeichnet und betrifft den örtlichen Abstand zeitlich aufeinander folgender Scan-Linien des Laser-Strahls.

Besonders vorteilhaft ist es, wenn vor dem Herstellen der Kondensations-Bereiche eine Simulation der Kondensations-Bereiche durchgeführt wird. Mit der Simulation der Kondensations-Einheiten bzw. der Funktionsweisen der Kondensations-Einheiten können die Kondensations-Parameter vorab bestimmt werden.

Zusammenfassend sind mit der Erfindung folgende Vorteile verbunden:
- Die Kondensations-Vorrichtung kann sich durch eine hohe Kondensations-Leistung auszeichnen. Dies betrifft sowohl eine Menge als auch die Art der zu extrahierenden Gas-Komponenten eines Gas-Gemisches.
- Mit dem eingesetzten 3-d-Druck-Verfahren kann die Kondensations-Vorrichtung flexibel ausgestaltet werden.
- Zudem kann mit dem 3-d-Druck-Verfahren eine kompakte Kondensations-Vorrichtung erhalten werden. So ist z.B. eine hohe Rektifizier-Säule nicht nötig, um eine gewünschte Abtrennleistung für eine Gas-Komponente eines Gas-Gemisches zu erzielen.
- Eine durch die Verstärkungs-Struktur (Gitter-Struktur) gestützte Wand des Mehr-Schicht-Körpers ermöglicht trotz hoher Betriebsdruck-Differenzen zwischen Schichten des Mehr-Schicht-Körpers sehr dünne Wandstärken und damit einen sehr guten Wärmedurchgang.
- Der DOE-Ansatz (statistische Versuchsplanung) für die Ermittlung der optimalen Porositäten macht die Auslegung empirisch kostengünstig zugänglich.

Anhand eines Ausführungsbeispiels und der dazugehörigen Figuren wird die Erfindung näher beschrieben. Die Figuren schematisch und stellen keine maßstabsgetreue Abbildung dar.

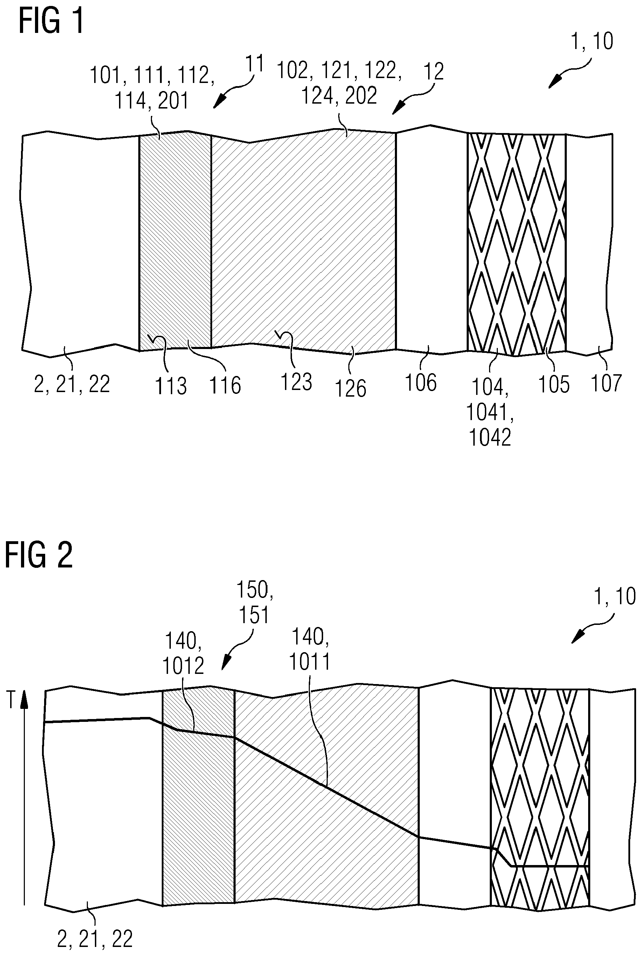

Figur 1 zeigt einen Ausschnitt einer Kondensations-Vorrichtung mit dem Mehr-Schicht-Körper.
Figur 2 zeigt eine Temperatur-Verlauf im Mehr-Schicht-Körper während eines Kondensations-Verfahrens.

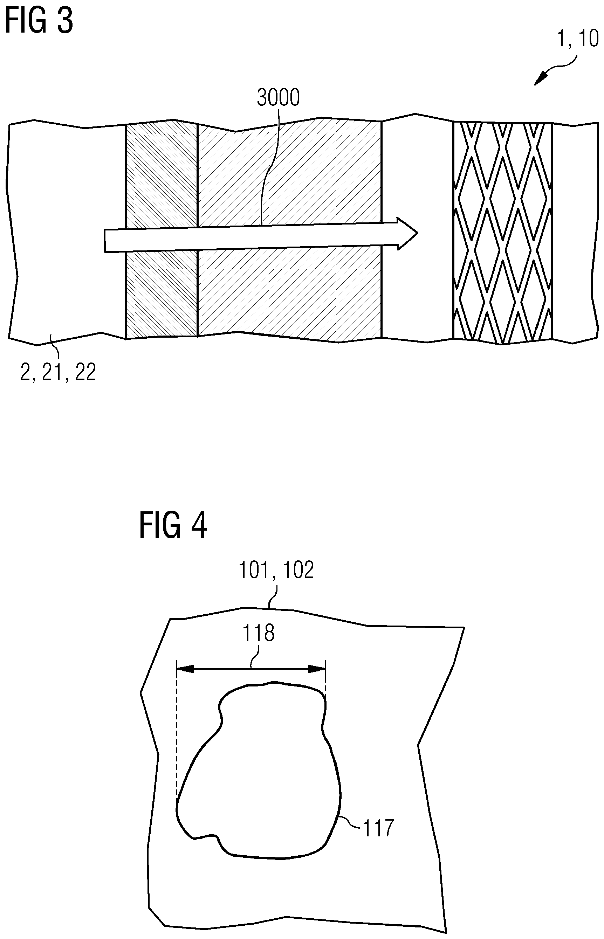

Figur 3 zeigt den Wärme-Strom während des Kondensations-Verfahrens.
Figur 4 zeigt einen Ausschnitt einer Metall-Schicht mit Metall-Poren.

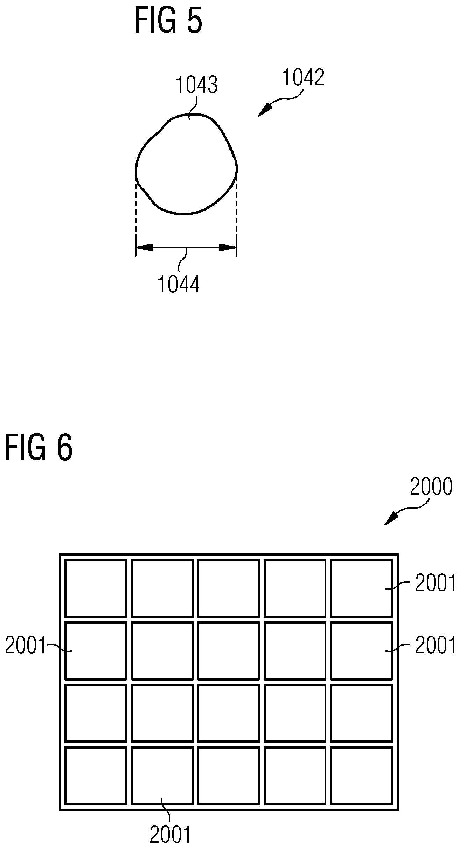

Figur 5 zeigt einen Kühl-Kanal.
Figur 6 zeigt eine Test-Einheit.

Gemäß dem Ausführungsbeispiel werden aus einem Gas-Gemisch 2 eine Gas-Komponente 21 und mindestens eine weitere Gas-Komponente 22 kondensiert (extrahiert, also abgetrennt und abgeleitet). Die Gas-Komponenten 21 und 22 werden aus dem Gas-Gemisch 2 entfernt bzw. angereichert. Das Gas-Gemisch besteht aus den Gas-Komponenten Wasser bzw. Wasser-Dampf (H₂O), Methanol (CH₃OH) und Dimethylether (CH₃-O-CH₃).

Die Kondensations-Vorrichtung 1 zur Kondensation einer Gas-Komponente 21 des Gas-Gemisches 2 und zur Kondensation mindestens der weiteren Gas-Komponente 22 des Gas-Gemisches 2 ist in einem Mehr-Schicht-Körper 10 integriert und weist folgende Bestandteile auf:
- Eine Kondensations-Einheit 11 zur Kondensation der Gas-Komponente 21 und
- eine weitere Kondensations-Einheit 12 zur Kondensation der weiteren Gas-Komponente 22.

Dabei ist zumindest eine der Kondensations-Einheiten (Kondensations-Kompartimente) 11 und 12 derart ausgestaltet, dass die jeweilige Gas-Komponente 21 oder 22 als Kondensat 201 oder 202 aus dem Gas-Gemisch 2 extrahiert (entfernt) und abtransportiert werden kann.

Die Schichten 101 und 102 mit der Kondensations-Einheit 21 und 22 weisen poröse Metall 111 und 121 mit Porosität 112 und 122 auf, die einen aus dem Bereich von 1 Vol.-% bis 85 Vol.-% ausgewählten Poren-Anteil aufweisen. Dabei weisen das poröse Metall 111 und 112 der jeweiligen Kondensations-Einheiten 11 und 12 voneinander unterschiedliche Porositäten 112 und 122 auf. Die Metall-Poren 117 und die weiteren Metall-Poren 127 sind unterschiedlich groß.

Zur Bildung der Kondensate 201 und 202 weisen die porösen Metalle 111 und 121 der Kondensations-Einheiten 11 und 12 bzw. der Schichten 101 und 102 entsprechende Absorptions-Oberflächen 113 und 123 auf.

In einer alternativen Ausführungsform weist eine der Absorptions-Oberflächen 113 und 123 zumindest eine Absorptions-Beschichtung 116 und 126 auf. Damit ist es möglich, eine die Kondensation-Leistung der Kondensations-Vorrichtung zu erhöhen.

Im Mehr-Schicht-Körper 10 ist in der Schicht 103 eine Wärme-Senke 104 zum Ableiten von bei der Bildung der Kondensate 201 und 202 freiwerdenden Kondensations-Wärme integriert. Die Schicht 103 fungiert als Wärme-Senken-Schicht. Die Wärme-Senke 104 ist strukturiert und weist damit Wärme-Senken-Struktur 1041 auf, die sich zwischen zwei massiven metallischen Schichten 106 und 107 befindet. Die Wärme-Senken-Struktur 1041 wird von Kühl-Kanälen 1042 zur Aufnahme eines Kühl-Fluids 1043 gebildet. Die Kühl-Kanäle 1042 sind Kühl-Kapillaren, die in der Schicht 103 des Mehr-Schicht-Körpers 10 integriert sind. Die Kühl-Kanale 1042 bzw. die Kühl-Kapillaren weisen einen aus dem Bereich von 1 µm bis 1 mm und insbesondere aus dem Bereich von 10 µm bis 900 µm ausgewählten Kanal-Durchmesser 1044 auf. Die Schicht 103 ist zusätzlich durch ein dreidimensionales metallisches Gitterfachwerk 105 verstärkt.

Die Kondensations-Einheit 11 und die weitere Kondensations-Einheit 12 unterscheiden sich in folgenden Kondensations-Einheits-Parametern 140: Wärmekapazität, Material-Dichte, Schicht-Dicke und Wärmeleitfähigkeit. Auch sind der durchschnittlicher Poren-Durchmesser 118 der Metall-Poren 117 des porösen Metalls 111 und der weitere durchschnittliche Poren-Durchmesser 128 der weiteren Metall-Poren 127 des Weiteren porösen Metalls 121 unterschiedlich.

Die Kondensations-Einheiten 11 und 12 der Kondensations-Vorrichtung 1 sind derart angeordnet, dass das Gas-Gemisch 2 die Kondensations-Einheiten 11 und 12 gleichzeitig passieren kann. Das Gas-Gemisch 2 wird gleichzeitig an der Kondensations-Oberfläche 113 und an der weiteren Kondensation-Oberfläche 123 vorbeigeleitet.

Die Schicht 101 der Kondensations-Einheit 11 verfügt über eine schlechte Wärmeleitfähigkeit und schafft damit ein Temperaturprofil 1011. Die schlechtere Wärmeleitfähigkeit λ₁ von Schicht 101 bewirkt eine höhere Temperatur an der Grenzfläche zwischen der Gasphase (Gas-Gemisch 2) und der weiteren Schicht 102 und führt damit zu einer selektiv ansteuerbaren Kondensation.

Eine relativ heiße weitere Schicht 102 wirkt als Gleichgewichtsbildner für die fraktionierte Kondensation. Kleine Kanaldurchmesser in der porösen weiteren Schicht 102 begünstigen die selektive Kondensation der weiteren Gas-Komponente 22 bei einer höheren Temperatur und tragen damit zur Verbesserung der Stoff-Trennung bei.

Zur Erprobung des Verhaltens wird eine Test-Einheit 2000 mit Test-Feldern (Array-Felder) 2001 gebaut werden, in denen nach Design-of-Experiment-Ansätzen die Schicht-Dicken und die Art der Porositäten variiert werden, so dass mit einer einheitlichen Kühlung durch Beobachten der Platte und ggf. Beprobung über Fluid-Kanäle in der Platte die Zusammensetzung des Kondensats bei identischer Dampfatmosphäre ermittelt werden kann.

Strukturfunktionale poröse Metall-Materialien (functionally structured digital materials) werden rein durch CAD / Simulation festgelegt. Sie können in verschiedenen Ausprägungen (Kavernennetzwerke; Solidarrangements) reproduzierbar gezielt gefertigt werden.

Die Kondensations-Vorrichtung 1 mit dem Mehr-Schicht-Körper 10 verfügt über einen Gesamt-Kondensations-Parameter 150 mit einem Parameter-Gradienten 151, der sich aus den Kondensations-Parametern 140 der einzelnen Schichten 101, ergibt. Dies ist mit den gezeigten Temperaturprofilen 1011 und 1012 der Schichten 101 und 102 angedeutet.

## Patentansprüche

1. Kondensations-Vorrichtung (1) zur Kondensation einer Gas-Komponente (21) eines Gas-Gemisches (2) und zur Kondensation mindestens einer weiteren Gas-Komponente (22) des Gas-Gemisches (2), aufweisend
- eine Kondensations-Einheit (11) zur Kondensation der Gas-Komponente (21) und
- eine weitere Kondensations-Einheit (12) zur Kondensation der weiteren Gas-Komponente (22), wobei
- zumindest eine der Kondensations-Einheiten (11, 12) derart ausgestaltet ist, dass die jeweilige Gas-Komponente (21, 22) als Kondensat (201, 202) aus dem Gas-Gemisch (2) extrahiert werden kann,
- die Kondensations-Vorrichtung (1) einen Mehr-Schicht-Körper (10) mit mehreren miteinander verbundenen Schichten (101, 102, 103) aufweist und
- zumindest eine der Schichten (101, 102, 103) zumindest eine der Kondensations-Einheiten (11, 12) aufweist.

2. Kondensations-Vorrichtung (1) nach Anspruch 1, wobei die Kondensations-Einheiten (11, 12) derart angeordnet sind, dass das Gas-Gemisch (2) die Kondensations-Einheiten (11, 12) nacheinander passieren kann.

3. Kondensations-Vorrichtung (1) nach Anspruch 1 oder 2, wobei die Schicht (101, 102) mit der Kondensations-Einheit (21, 22) ein poröses Metall (111, 121) mit einer Porosität (112, 122) aufweist, die einen aus dem Bereich von 1 Vol.-% bis 85 Vol.-% ausgewählten Poren-Anteil aufweist.

4. Kondensation-Vorrichtung (1) nach Anspruch 3, wobei die Kondensations-Einheit (11) und die weitere Kondensations-Einheit (12) das poröse Metall (111), 112) aufweisen und das poröse Metall (111, 112) der jeweiligen Kondensations-Einheiten (11, 12) voneinander unterschiedliche Porositäten (112, 122) aufweisen.

5. Kondensations-Vorrichtung (1) nach Anspruch 3 oder 4, wobei das poröse Metall (11, 12) zur Bildung des Kondensats (201, 202) eine Absorptions-Oberfläche (113, 123) für die Absorption einer der Gas-Komponenten (21, 22) aufweist.

6. Kondensations-Vorrichtung (1) nach Anspruch 5, wobei die Absorptions-Oberfläche (113, 123) zumindest eine Absorptions-Beschichtung (116, 126) aufweist.

7. Kondensations-Vorrichtung (1) nach einem der Ansprüche 1 bis 6, wobei zumindest eine der Schichten (101, 102, 103) des Mehr-Schicht-Körpers (10) mindestens eine Verstärkungs-Struktur (105) aufweist.

8. Kondensations-Vorrichtung (1) nach einem der Ansprüche 1 bis 7, wobei zumindest eine der Schichten (101, 102, 103) des Mehr-Schicht-Körpers (10) eine Wärme-Senke (104) zum Ableiten von bei der Bildung des Kondensats (201, 202)) freiwerdenden Kondensations-Wärme aufweist.

9. Kondensations-Vorrichtung (1) nach Anspruch 8, wobei die Wärme-Senke (104) eine Wärme-Senken-Struktur (1041) aufweist.

10. Kondensations-Vorrichtung (1) nach Anspruch 9, wobei die Wärme-Senken-Struktur (1041) zumindest einen Kühl-Kanal (1042) zur Aufnahme eines Kühl-Fluids (1043) aufweist.

11. Kondensations-Vorrichtung (1) nach Anspruch 10, wobei der Kühl-Kanal (1042) einen aus dem Bereich von 1 µm bis 1 mm und insbesondere aus dem Bereich von 10 µm bis 900 µm ausgewählten Kanal-Durchmesser (1044) aufweist.

12. Kondensations-Vorrichtung (1) nach einem der Ansprüche 1 bis 11, wobei sich die Kondensations-Einheit (11) und die weitere Kondensations-Einheit (12) in mindestens einem aus der Gruppe Wärmekapazität, Material-Dichte, Schicht-Dicke, Wärmeleitfähigkeit, durchschnittlicher Poren-Durchmesser (118, 128), durchschnittlicher Kanal-Durchmesser und Absorptions-Beschichtung (116) ausgewählten Kondensations-Einheits-Parameter (140) voneinander unterscheiden.

13. Kondensations-Vorrichtung (1) nach Anspruch 12, wobei aus den Kondensations-Einheits-Parametern (140) ein Gesamt-Kondensations-Parameter (150) gebildet ist, der einen Gesamt-Parameter-Gradienten (151) aufweist.

14. Kondensations-Verfahren zur Kondensation der Gas-Komponente (21) des Gas-Gemisches (2) und zur Kondensation der weiteren Gas-Komponente (22) des Gas-Gemisches (2) unter Verwendung der Kondensations-Vorrichtung (1) nach einem der Ansprüche 1 bis 13, wobei das Gas-Gemisch (2) an den Kondensations-Einheiten (11, 12) derart vorbeigeleitet wird, dass zumindest eine der Gas-Komponenten (21, 22) als Kondensat (201, 202) aus dem Gas-Gemisch (2) extrahiert wird.

15. Kondensations-Verfahren nach Anspruch 14, wobei der Gesamt-Parameter-Gradient (151) eingestellt wird.

16. Kondensations-Verfahren nach Anspruch 14 oder 15, wobei als Gas-Komponente (21) und/oder als weitere Gas-Komponente (22) ein aus der Gruppe Wasser, Methanol und Dimethylether ausgewähltes Gas verwendet wird.

17. Herstell-Verfahren zum Herstellen der Kondensations-Vorrichtung (1) nach einem der Ansprüche 1 bis 13, wobei zumindest eine der Kondensations-Einheiten (11, 12) mit Hilfe eines 3d-Drucks-Verfahrens hergestellt wird.

18. Herstell-Verfahren nach Anspruch 17, wobei für das 3d-Druck-Verfahren ein Pulver-Bett-Verfahren durchgeführt wird.

19. Herstell-Verfahren nach Anspruch 17 oder 18, wobei ein Variieren einer Aufschmelz-Energie durchgeführt wird.

20. Herstell-Verfahren nach Anspruch 19, wobei zum Variieren der Aufschmelz-Energie eine Laser-Energie des Laser-Strahls und/oder ein Scan-Abstand des Laser-Strahls eingestellt werden.

21. Herstell-Verfahren nach einem der Ansprüche 17 bis 20, wobei vor dem Herstellen der Kondensations-Einheiten (11, 12) eine Simulation der Kondensations-Einheiten (11, 12) durchgeführt wird.
